# NEW EUROPEAN PATENT SPECIFICATION

(11) **EP 2 258 567 B2**
(45) Date of publication and mention of the opposition decision: **24.05.2017**
(45) Mention of the grant of the patent: 11.07.2012
(21) Application number: 10164859.0
(22) Date of filing: 03.06.2010
(51) Int. Cl.: B60D 1/52, B60R 9/06, B60D 1/06

(54) **Vehicle hitch device**
Anbauvorrichtung für ein Fahrzeug
Dispositif d'accouplement pour véhicule

(30) Priority: 03.06.2009 NL 2002959; 28.09.2009 NL 2003564
(43) Date of publication of application: 08.12.2010
(73) Proprietor: Brink Towing Systems B.V., 7951 CX Staphorst (NL)
(72) Inventor: Eising, Fredrik Jacob, 7951 CX Staphorst (NL); van Ittersum, Benno, 7951 CX Staphorst (NL)
(74) Representative: Valea AB

(56) References cited:
- US-A- 3 694 006

## Description

### BACKGROUND TO THE INVENTION

The invention relates to an accessory coupling for a vehicle.

The use is known of a towing hook for the attachment of accessories, e.g. carriers, or a trailer. However, certain types of vehicles, e.g. hybrid vehicles, are not regarded by the manufacturer as suited to towing a trailer. To make it possible to attach carriers to such vehicles, specific carrier couplings have been developed. However, such couplings are not coordinated with one another and are therefore not interchangeable. Pre-existing carriers purchased in the past do not entirely match with the specific carrier couplings. The freedom of choice and the economic service life of the carriers are thereby limited.

An object of the invention is to propose an accessory coupling for a vehicle whereby pre-existing accessories can be attached to the vehicle.

An object of the invention is to propose an accessory coupling which substantially prevents the attachment of a trailer.

An object of the invention is to propose a universally usable accessory coupling.

US 369406 discloses a hitch combination which includes an interfering part to prevent the coupling of a non adapted trailer

### SUMMARY OF THE INVENTION

The invention proposes an accessory coupling for the attachment of accessories at the rear side of a vehicle in accordance with claim 1 and claim 13. The accessory coupling is provided with a neck portion whose centreline runs substantially vertically, a ball element connected to the neck portion, and a blocking body connected to the ball element. The ball element has a spherical external surface substantially situated on a notional sphere whose centre point is situated on the centreline. The blocking body is at least partly situated outside the notional sphere. The blocking body is provided, at a distance from the centreline, with corner points which are situated outside the notional sphere.

The accessory coupling has a ball element with which couplings intended to engage with a normal towing hook can engage. Such is the case with a large part of pre-existing accessories. In particular, couplings of accessories having portions or surfaces abutting in a horizontal direction against one or two vertical side portions of the accessory coupling are able to be attached to the present accessory coupling. Accessories sold in the past can therefore be attached to the accessory coupling according to the invention.

The blocking body constitutes an obstacle to the attachment of a trailer since a coupling of a trailer requires an even sphere thus, making it possible to prevent the trailer coupling from engaging with the ball element.

The blocking body clearly visualizes blocking the placing of a trailer coupling on the accessory coupling.

In an embodiment the blocking body is provided on the opposite side of the ball element from the neck portion. A trailer coupling placed on the accessory coupling from above can thereby be kept at a distance from the ball element and therefore not become attached. Moreover, a user may immediately see that the blocking body is there, and may therefore make no attempt to attach a trailer coupling.

In a simple embodiment the blocking body is oblong.

A portion of the coupling of currently available accessories encloses the ball element of a towing hook in the vehicle movement direction. In an embodiment of the invention, the blocking body therefore extends in its longitudinal direction transversely to the direction of movement of the vehicle, thereby hardly or not at all hindering the use of pre-existing coupling elements.

Another portion of the coupling of pre-existing accessories encloses the ball element of a towing hook transversely to the vehicle movement direction. In an embodiment of the invention, the blocking body therefore extends in its longitudinal direction in the direction of movement of the vehicle, thereby hardly or not at all hindering the action of the last-mentioned pre-existing coupling elements.

In an embodiment the blocking body is provided with mutually parallel side surfaces on its long sides. The coupling elements of currently available accessories can in this case be stabilized relative to one another.

In an embodiment the blocking body, when viewed in projection parallel to the centreline, is situated entirely within the outside perimeter of the ball element, making it possible for the placing on of accessories to take place unhindered.

In an embodiment the blocking body is provided, on the side which faces away from the ball element, with a first straight surface which extends transversely to the centreline. The first straight surface can stably support accessories placed on it.

In an embodiment thereof, the point of intersection of the first straight surface with the centreline is situated on the notional sphere, thereby limiting the height of the blocking body relative to the ball element.

In an embodiment the ball element is provided, on the side which faces away from the neck portion, with a second straight surface which extends transversely to the centreline.

In an embodiment the first straight surface is at least partly situated above the second straight surface.

According to example embodiments the blocking body forms an integral part of the ball element. The blocking body may thus be formed together with the ball element.

According to example embodiments the blocking body is a singular protrusion from the ball element. The protrusion may be a separate part attached to the ball element or it may be formed by a welding bead.

According to the invention at an upper end on the centreline the blocking body, or the ball element, is within or tangential to the notional sphere. In this manner couplings of many pre-existing accessories fit on the accessory coupling but couplings of trailers will not be able to be attached to the accessory coupling.

### BRIEF DESCRIPTION OF THE DRAWINGS

The invention is explained below on the basis of a number of versions depicted by way of examples in the attached drawings, in which:
Figures 1A and 1B depict an isometric view and a partial longitudinal section of a universal accessory carrier with coupling element according to a first embodiment of the invention, with which a coupling of a first accessory engages;
Figures 1C and 1D depict a front view and a side view of the coupling element according to Figures 1A-B;
Figures 2A and 2B depict a partial cross section and an isometric view of the accessory carrier with coupling element according to Figures 1A-1D, with which a coupling of a second accessory engages;
Figures 3A-3C depict two isometric views and a partial longitudinal cross section of the accessory carrier with coupling element according to Figures 1A-1D, with which a coupling of a third accessory engages;
Figures 4A and 4B depict an isometric view and a partial longitudinal cross section of the accessory carrier with coupling element according to Figures 1A-1D, with which a coupling of a fourth accessory engages; and
Figures 5A-5C depict an isometric view, a front view and a side view of an alternative coupling element for the accessory carrier according to the drawings referred to above.

### DETAILED DESCRIPTION OF THE DRAWINGS

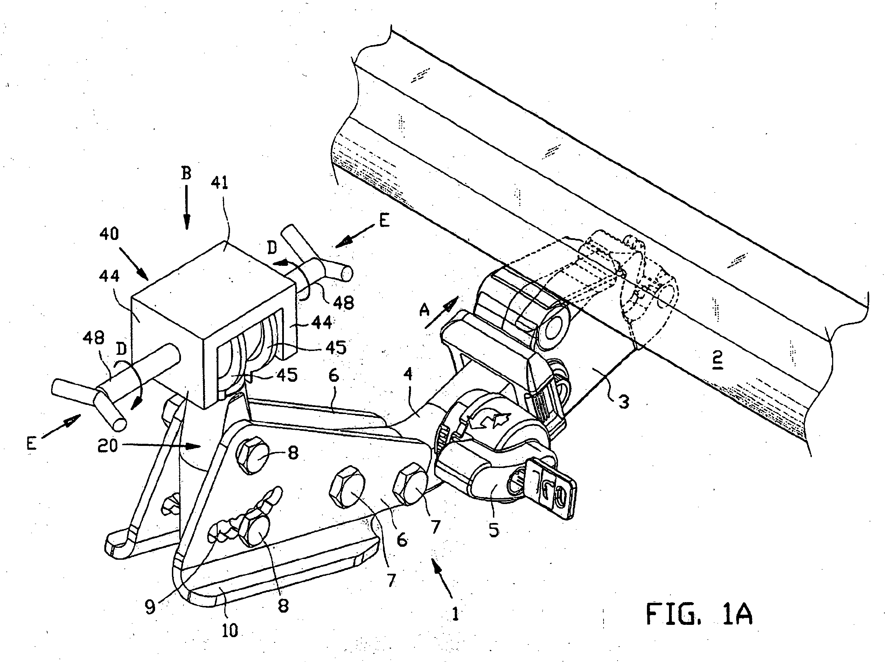

Figures 1A-4B depict a universal accessory carrier 1 according to a first embodiment of the invention, with which couplings 40, 140, 240, 340 of different makes of accessories engage. For the sake of clarity of the drawings, hatchings of cross sections have been omitted.

The accessory carrier 1 comprises in the embodiment depicted an insertable metal coupling 4 which is operable by means of a rotary knob 5. To this end, the insertable coupling 4 is inserted in a metal insertion socket 3 which is fitted firmly under the rear bumper 2 of an otherwise undepicted vehicle. The insertion direction is parallel to the direction of movement of the vehicle. Such an insertable coupling 4 is already known per se from removable towing hooks made by the applicant. The accessory carrier may likewise be connected detachably or permanently to the vehicle, as known per se from towing hooks made by the applicant.

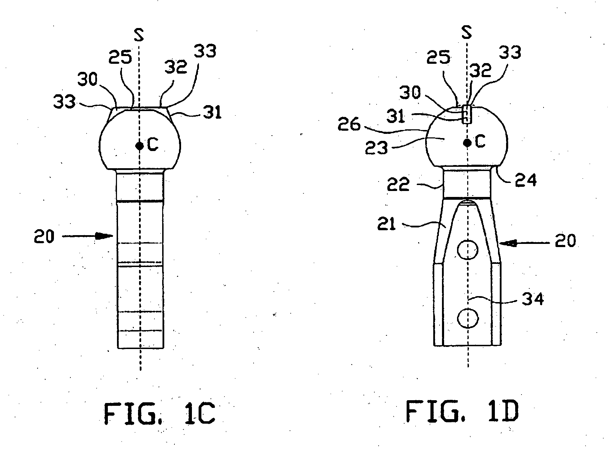

The accessory carrier 1 comprises two parallel metal sideplates 6 fastened to the insertable coupling 4 by bolts 7. Each sideplate 6 is provided on the underside with a stiffening edge 10 which is directed outwards. A metal coupling element 20 is fastened between the sideplates 6 by bolts 8, and the pivot angle between the coupling element 20 and the sideplates 6 in a vertical plane may be set by choosing an appropriate hole from among a series of holes 9. The coupling element 20 is also depicted separately in Figures 1C and 1D.

The coupling element 20 comprises a straight cylindrical base portion 21 which makes a transition on the upper side, via a conical narrowing, to a narrower straight cylindrical neck portion 22. The base portion 21 is provided on each side with a flattened face 34 which in a fitted state abuts against the sideplates 6. The neck portion 22 makes a transition to a ball element 23 whose circumferential surface 26 is situated on a notional sphere with a centre point C situated on the centreline S. The ball element 23 has on the underside a peripheral lower flattening 24 and on the upper side an upper flattening 25, both of which extend transversely to the centreline S of the neck portion 22. The shape and dimensioning of the ball element 23 conform in this respect to the ISO standards for towing balls of towing hooks.

According to this embodiment of the invention, the coupling element 20 is provided on the upper side with a straight oblong metal blocking body 30 which is connected to or integral with the ball element 23. The blocking body 30 comprises a straight upper surface 32 extending transversely to the centreline S, and two straight side surfaces 31 running obliquely outwards from the straight corner edges 33 so that they are within the tangent between the ball element 23 and the relating corner edge 33. The corner edges 33 and the adjoining end portions of the upper surface 32 and the side surfaces 31 are outside the notional sphere with centre point C. The upper surface 32 touches in way of the centreline S the notional sphere with centre point C.

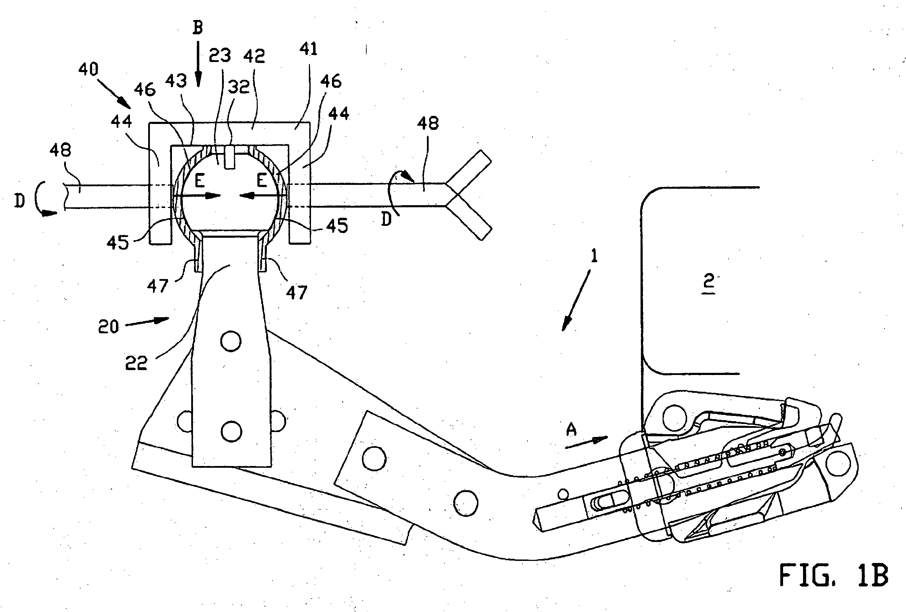

Figures 1A and 1B depict the coupling 40 of a first otherwise undepicted accessory behind the vehicle, e.g. a cycle carrier, which engages with the coupling element 20. The functionality of the coupling 40 corresponds to attaching the cycle carrier which is sold under the trade name Thule Euroway. The coupling 40 comprises a U-shaped metal housing 41 connected firmly to the accessory. The housing 41 comprises a straight upper wall 42 and two parallel sidewalls 44 which delineate an accommodating space for the ball element 23, two threaded tightening screws 48 each extending through a threaded aperture in the sidewalls 44, and two movably confined metal shells 45. The shells 45 each comprise a first shell portion 46 fittable matchingly to one side of the ball element 23, and a second shell portion 47 fittable matchingly to one side of the neck portion 22. The coupling 40 can, in direction B parallel to the centreline S, be placed on the coupling element 20, whereby an inside surface 43 of the upper wall 42 comes to bear directly upon the upper surface 32 of the blocking body 30. Turning the tightening screws 48 in direction D will thereafter cause the shells 45 to engage in direction E matchingly with and clamp the coupling element 20 firmly to effect association both by shape and by force with the coupling element 20.

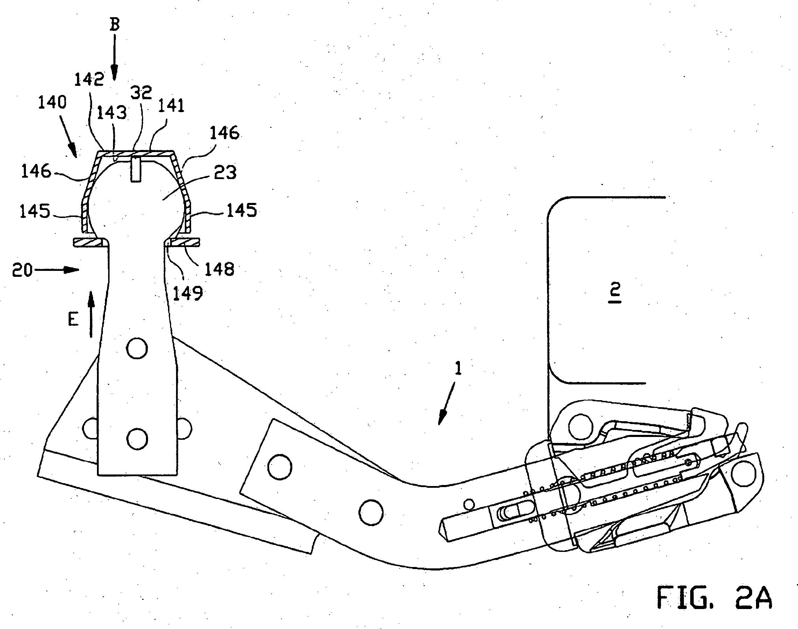

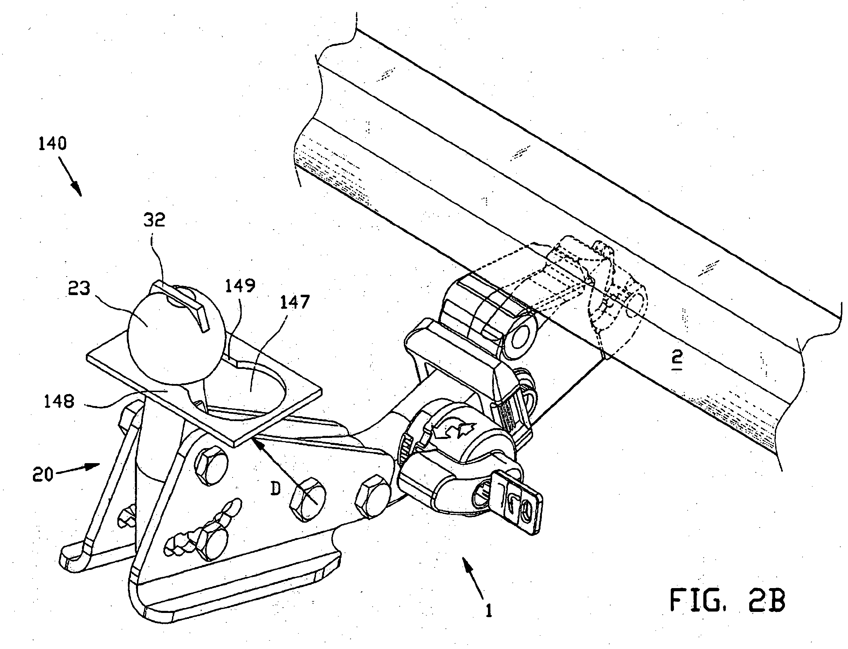

Figures 2A and 2B depict a coupling 140 of a second otherwise undepicted accessory behind the vehicle, e.g. a cycle carrier, which engages with the coupling element 20. The functionality of this coupling 140 corresponds to attaching the cycle carrier which is sold under the trade name Spinder. The coupling 140 comprises a housing 141 connected firmly to the accessory, and a locking plate 148 which can by means of otherwise undepicted guides be moved along direction D in its plane and be clamped by otherwise undepicted clamps in direction E towards the housing 141. The housing 141 comprises a straight upper wall 142, a conically surrounding peripheral wall 146 which connects to the upper wall 142, and a straight surrounding peripheral wall 145 which matchingly accommodates the ball element 23. The locking plate 148 comprises a circular aperture 147 for the ball element 23 and a straight slot 149 to accommodate the neck portion 22. The coupling 140 can, in direction B parallel to the centreline S, be placed on the coupling element 20, whereby the housing 141 matchingly accommodates the ball element 23 via the circular aperture 147, and the inner surface 143 of the upper wall 142 comes to bear directly upon the upper surface 32 of the blocking body 30. Thereafter the locking plate 148 is moved along direction D in way of the slot 149 to arrive under the peripheral lower flattening 24 in way of the slot 149. Thereafter the locking plate 148 is clamped in direction E against the housing 141.

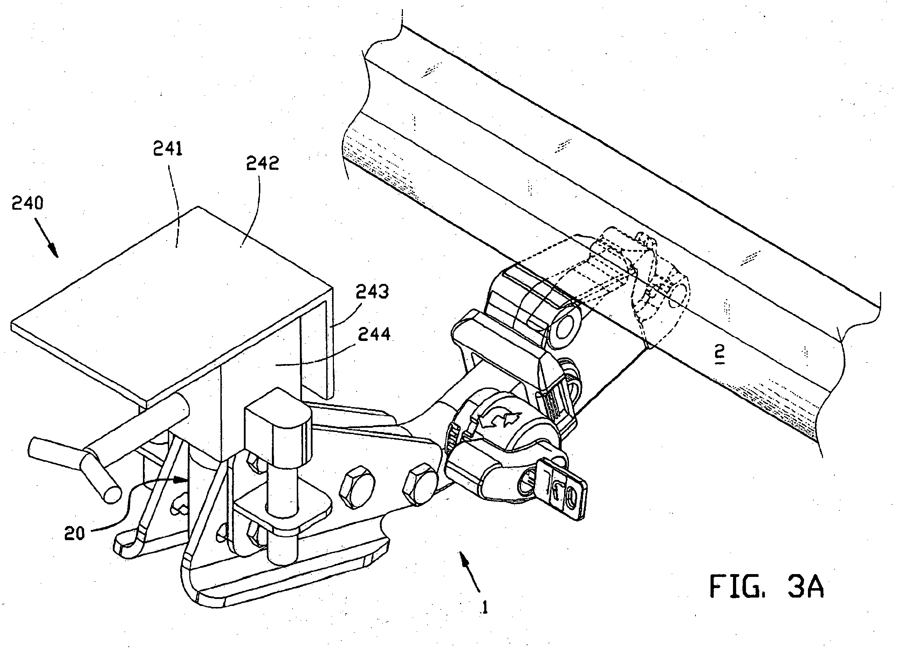

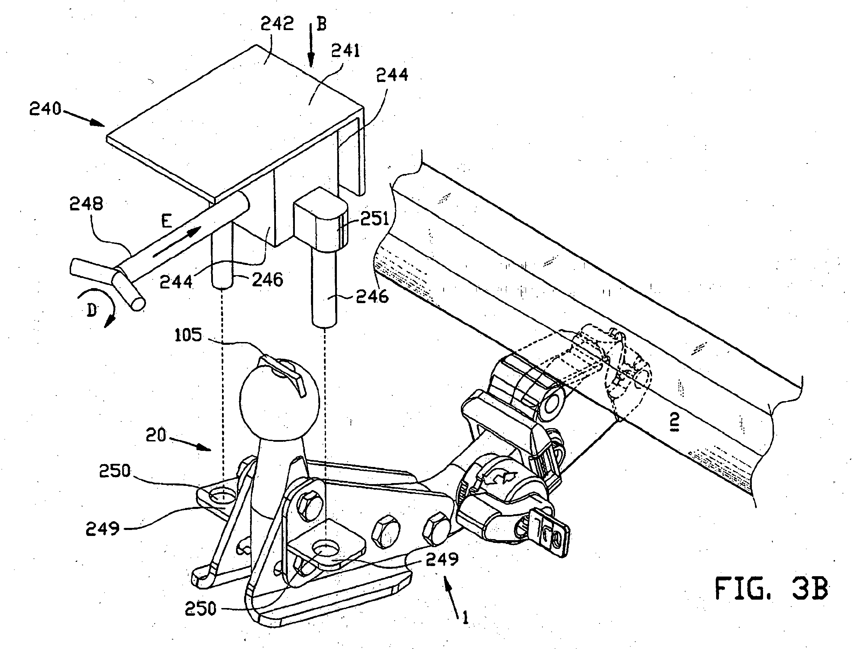

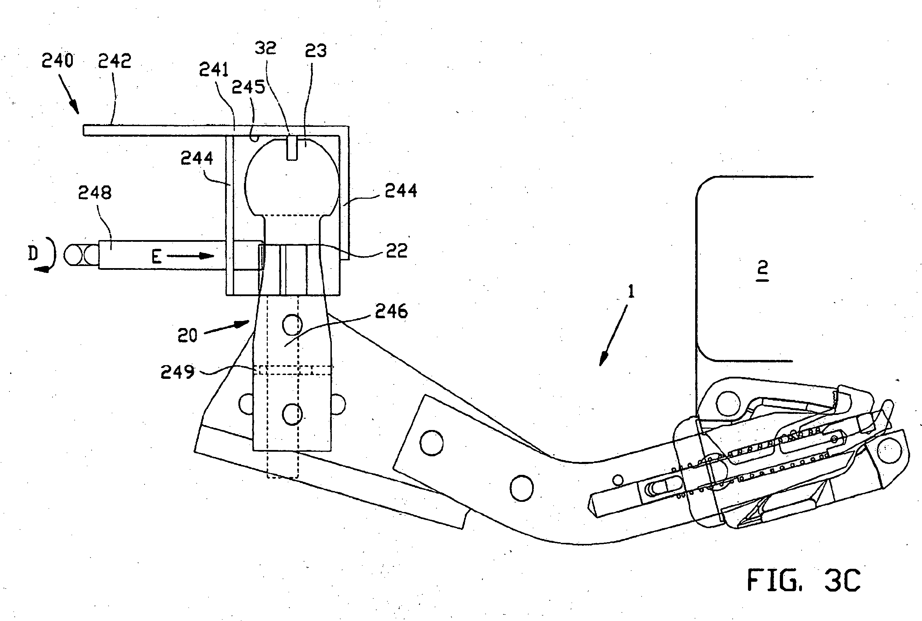

Figures 3A-3C depict a coupling 240 of a third otherwise undepicted accessory behind the vehicle, e.g. a cycle carrier, which engages with the coupling element 20. The functionality of this coupling 240 corresponds to attaching the cycle carrier which is sold under the trade name Twinnyload Classic. The coupling 240 comprises a housing 241 connected firmly to the accessory. The housing 241 comprises an upper wall 242 and four sidewalls 244 which delineate an accommodating space for the ball element 23, a threaded tightening screw 248 extending through a threaded aperture in one of the sidewalls 244, and on each side of the tightening screw 248 a support 251 with a positioning pin 246, which positioning pins 246 extend parallel with one another in a placing-on direction B of the coupling 240. The coupling 240 comprises also two side supports 249 fastened to the metal sideplates 6 by the bolts 8 of the coupling element 20. The side supports 249 are each provided with an aperture 250 to accommodate the positioning pins 246. The coupling 240 can, in direction B parallel to the centreline S, be placed on the coupling element 20, whereby the positioning pins 246 run through the apertures 250 in the side supports 249, and an inside surface 245 of the upper wall 242 come to bear directly upon the upper surface 32 of the blocking body 30. Turning the tightening screw 248 in direction D will cause it to engage in direction E with the neck portion 22 of the coupling element 20, thereby also, on the upper side, pressing the housing 241 against the ball element 23 and, on the lower side, pressing the positioning pins 246 against the side supports 249.

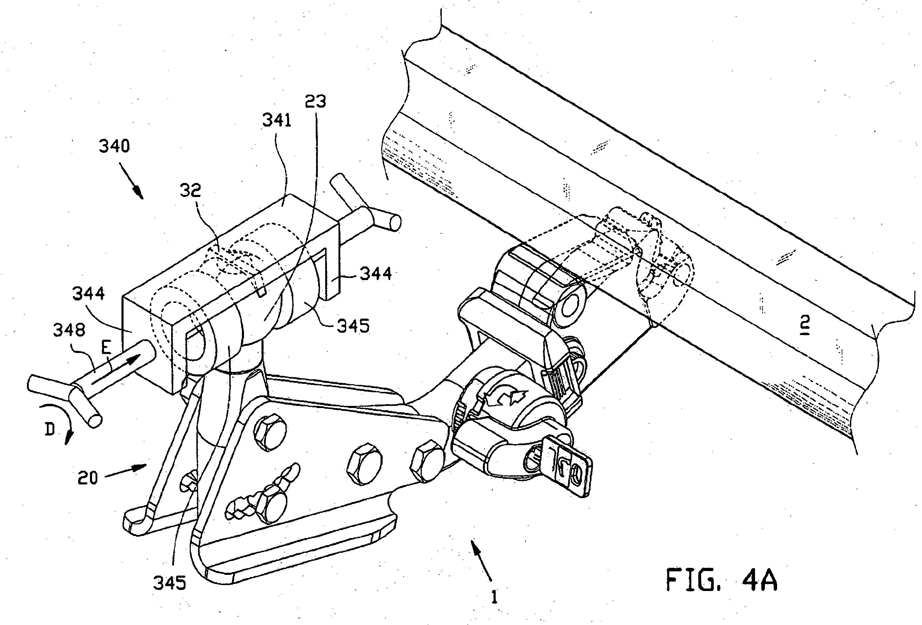

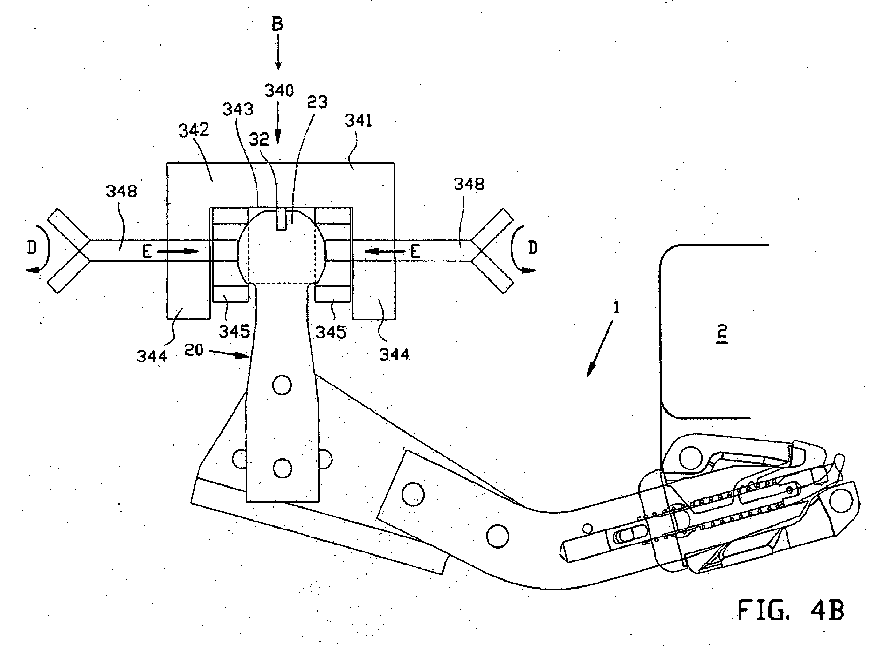

Figures 4A and 4B depict a coupling 340 of a fourth otherwise undepicted accessory behind the vehicle, e.g. a cycle carrier, which engages with the coupling element 20. The functionality of this coupling 340 corresponds to attaching the cycle carrier which is sold under the trade names Thule Euroclassic G5, Thule Europower, Twinnyload automaat and Spinder automaat. The coupling 340 comprises a U-shaped metal housing 341 connected firmly to the accessory. The housing 341 comprises a straight upper wall 342 and two parallel sidewalls 344 which delineate an accommodating space for the ball element 23, two threaded tightening screws 348 each extending through a threaded aperture in the sidewalls 344, and two movably confined metal rings 345. The coupling 340 can, in direction B parallel to the centreline S, be placed on the coupling element 20, whereby an inside surface 343 of the upper wall 342 comes to bear directly upon the upper surface 32 of the blocking body 30. Turning the tightening screws 348 in direction D will thereafter cause the rings 345 to engage in direction E with and clamp the coupling element 20 rigidly with partial accommodation.

The couplings 40, 140, 240, 340 described above are all configured to engage with the towing ball of a normal standardised towing hook and can therefore also engage with the ball element 23 which per se also conforms to the standards. However, the blocking body 30 rules out attaching a trailer.

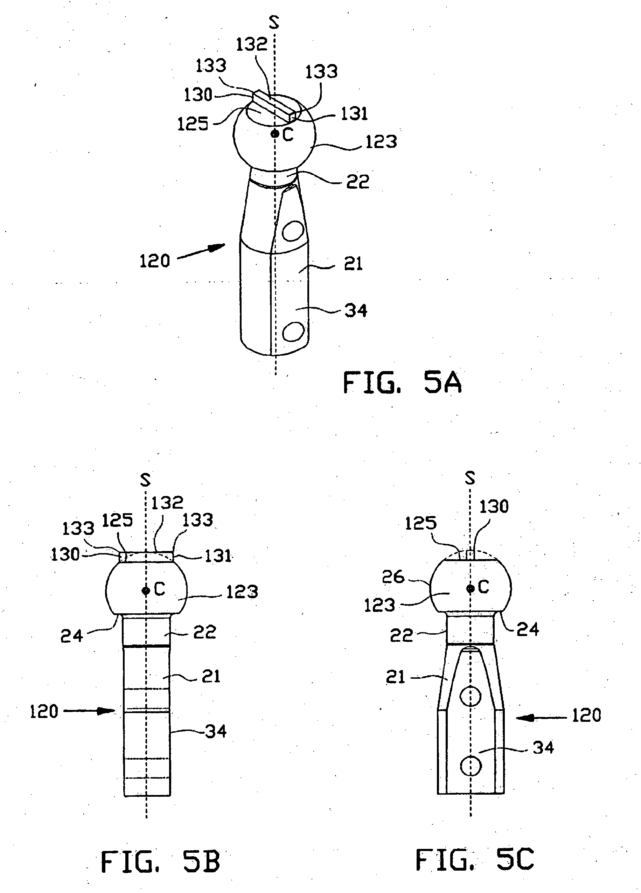

Figures 5A - 5C depict an alternative coupling element 120 according to the invention. The neck portion 22 makes a transition to a ball element 123 whose peripheral surface 26 is situated on a notional sphere with a centre point C situated on the centreline S. The ball element 123 has on the upper side an upper flattening 125 which extends transversely to the centreline S of the neck portion 22 and which has a diameter equal to about half of the diameter of the notional sphere.

The coupling element 120 according to this alternative embodiment is provided with a metal ball element 123 with an alternative upper flattening 125 which extends transversely to the centreline S. The upper flattening 125 has transversely to the centreline S a width substantially equal to or greater than the diameter of the sphere with centre point C. The coupling element 120 is provided on the upper side with an alternative straight oblong metal blocking body 130 which is connected to or integral with the ball element 123. The blocking body 130 extends across the whole width of the upper flattening 125 and comprises a straight upper surface 132 extending transversely to the centreline S, and two straight side surfaces 131 extending parallel to the centreline S. The corner edges 133 and the adjoining end portions of the upper surface 132 and the side surfaces 131 are outside the notional sphere of the ball element 123 with centre point C. The upper surface 132 touches in way of the centreline S the notional sphere with centre point C.

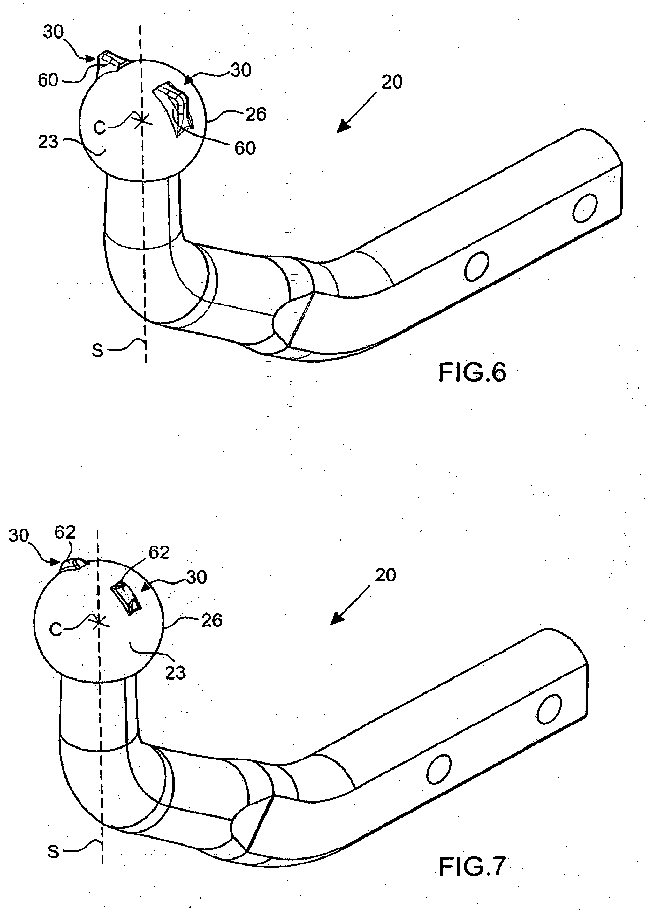

Fig. 6 illustrates a coupling element 20 according to example embodiments. The coupling element 20 is provided with a ball element 23, a peripheral surface 26 of which is situated on a notional sphere with a centre point C situated on a centreline S. Two blocking bodies 30 in the form of singular protrusions 60 protrude from the notional sphere. The singular protrusions 60 are provided, at a distance from the centreline S. The singular protrusions 60 comprise corner points which are situated outside the notional sphere. The ball element 23, at its upper end on the centreline S, is within or tangential to the notional sphere with centre point C. The singular protrusions 60 may be separate parts attached, e.g. by means of welding, to the ball element 23 or they may be an integral part of the ball element 23, i.e. formed from the same material at the same time as the ball element 23.

Fig. 7 illustrates a coupling element 20 according to example embodiments. The coupling element 20 is provided with a ball element 23, a peripheral surface 26 of which is situated on a notional sphere with a centre point C situated on a centreline S. Two blocking bodies in the form of two welded beads 62 are provided on the ball element 23. The welded beads 62 are provided, at a distance from the centreline S. The ball element 23, at its upper end on the centreline S, is within or tangential to the notional sphere with centre point C. The welded beads 62 may be seen as singular protrusions which are situated outside the notional sphere.

The above description is intended to explain the operation of preferred embodiments of the invention and not to limit the scope of the invention. Many variations falling within the spirit and scope of the present invention will be obvious to one skilled in the art from the above description.

## Claims

1. An accessory coupling for the attachment of accessories at the rear side of a vehicle, which accessory coupling is provided with a neck portion (22) whose centreline (S) runs substantially vertically, a ball element (23, 123) connected to the neck portion (22), and a blocking body (30, 130, 60, 62) connected to the ball element (23, 123), which ball element (23, 123) has a spherical external surface substantially situated on a notional sphere whose centre point (C) is situated on the centreline (S), and which blocking body (30, 130) is at least partly situated outside the notional sphere,
**characterized in that**
the blocking body (30, 130, 60, 62) is provided, at a distance from the centreline (S), with corner points which are situated outside the notional sphere, and **in that** at an upper end on the centreline (S) the blocking body (30, 130) is within or tangential to the notional sphere with centre point (C).

2. The accessory coupling according to claim 1, in which the blocking body (30, 130) is provided on the opposite side of the ball element to the neck portion.

3. The accessory coupling according to claim 1 or 2, in which the blocking body (30, 130) is oblong.

4. The accessory coupling according to claim 3, in which the blocking body (30, 130) in its longitudinal direction extends transversely to the direction of movement of the vehicle.

5. The accessory coupling according to claim 3, in which the blocking body (30, 130) in its longitudinal direction extends in the direction of movement of the vehicle.

6. The accessory coupling according to claim 3, 4 or 5, in which the blocking body (130) is provided with mutually parallel side surfaces (131) parallel with the centreline (S).

7. The accessory coupling according to any one of the above claims, in which the blocking body (30, 130), when viewed in projection parallel to the centreline (S), is situated entirely within the external periphery of the ball element (23, 123).

8. The accessory coupling according to any one of the above claims, in which the blocking body (30, 130) is provided, on the side facing away from the ball element (23, 123), with a first straight surface (32, 132) which extends transversely to the centreline (S).

9. The accessory coupling according to claim 8, in which the intersection point of the first straight surface (32, 132) with the centreline (S) is situated on the notional sphere.

10. The accessory coupling according to any one of the above claims, in which the ball element (23, 123) is provided, on the side facing away from the neck portion (22), with a second straight surface (25, 125) which extends transversely to the centreline (S).

11. The accessory coupling according to claims 8 and 10, in which the first straight surface (23, 123) is at least partly situated above the second straight surface (25, 125).

12. The accessory coupling according to any one of the preceding claims, in which the blocking body (30) forms an integral part of the ball element (23).

13. An accessory coupling for the attachment of accessories at the rear side of a vehicle, which accessory coupling is provided with a neck portion (22) whose centreline (S) runs substantial vertically, a ball element (23, 123) connected to the neck portion (22), and a blocking body (30, 60, 62) connected to the ball element (23, 123), which ball element (23, 123) has a spherical external surface substantially situated on a notional sphere whose centre point (C) is situated on the centreline (S), and which blocking body (30, 60, 62) is at least partly situated outside the notional sphere,
**characterized in that**
the ball element (23, 123) comprises two blocking bodies (30) where each blocking body (30) is a singular protrusion (60, 62) from the ball element (23, 123) which are provided at a distance from the centreline (S), and **in that** the singular protrusions (60, 62) comprise corner points which are situated outside the notional sphere.

14. The accessory coupling according to claim 13, in which the blocking bodies (30) are provided on the opposite side of the ball element to the neck portion.

15. The accessory coupling according to any one of claims 13 and 14, in which the blocking body (30) forms an integral part of the ball element (23).

16. The accessory coupling according to any one of claims 13 -15, in which at an upper end on the centreline (S) the ball element (23) is within or tangential to the notional sphere with centre point (C).

## Patentansprüche

1. Zusatzteilkopplung zum Anbringen von Zusatzteilen an der Rückseite eines Fahrzeugs, wobei die Zusatzteilkopplung mit einem Ansatzabschnitt (22), dessen Mittellinie (S) im Wesentlichen vertikal verläuft, mit einem Kugelelement (23, 123), welches mit dem Ansatzabschnitt (22) verbunden ist, und mit einem Arretierungskörper (30, 130, 60, 62), welcher mit dem Kugelelement (23, 123) verbunden ist, versehen ist, wobei das Kugelelement (23, 123) eine sphärische Außenfläche aufweist, welche im Wesentlichen auf einer fiktiven Kugel angeordnet ist, deren Mittelpunkt (C) auf der Mittellinie (S) angeordnet ist, und wobei der Arretierungskörper (30, 130) zumindest teilweise außerhalb der fiktiven Kugel angeordnet ist,
**dadurch gekennzeichnet,**
**dass** der Arretierungskörper (30, 130, 60, 62) in einer Entfernung von der Mittellinie (S) mit Eckpunkten versehen ist, welche außerhalb der fiktiven Kugel angeordnet sind, und dass an einem oberen Ende auf der Mittellinie (S) der Arretierungskörper (30, 130) innerhalb der fiktiven Kugel mit dem Mittelpunkt (C) oder tangential dazu liegt.

2. Zusatzteilkopplung nach Anspruch 1, **dadurch gekennzeichnet, dass** der Arretierungskörper (30, 130) auf der dem Ansatzabschnitt gegenüberliegenden Seite des Kugelelements vorhanden ist.

3. Zusatzteilkopplung nach Anspruch 1 oder 2, **dadurch gekennzeichnet, dass** der Arretierungskörper (30, 130) länglich ist.

4. Zusatzteilkopplung nach Anspruch 3, **dadurch gekennzeichnet, dass** sich der Arretierungskörper (30, 130) in seiner Längsrichtung quer zu der Bewegungsrichtung des Fahrzeugs erstreckt.

5. Zusatzteilkopplung nach Anspruch 3, **dadurch gekennzeichnet, dass** sich der Arretierungskörper (30, 130) in seiner Längsrichtung in der Bewegungsrichtung des Fahrzeugs erstreckt.

6. Zusatzteilkopplung nach Anspruch 3, 4 oder 5, **dadurch gekennzeichnet, dass** der Arretierungskörper (130) mit gegenseitig parallelen Seitenflächen (131) versehen ist, welche parallel zu der Mittellinie (S) liegen.

7. Zusatzteilkopplung nach einem der vorhergehenden Ansprüche, **dadurch gekennzeichnet, dass** der Arretierungskörper (30, 130), wenn er in einer Projektion parallel zu der Mittellinie (S) betrachtet wird, vollständig innerhalb des Außenumfangs des Kugelelements (23, 123) angeordnet ist.

8. Zusatzteilkopplung nach einem der vorhergehenden Ansprüche, **dadurch gekennzeichnet, dass** der Arretierungskörper (30, 130) auf der Seite, welche von dem Kugelelement (23, 123) abgewandt ist, mit einer ersten geradlinigen Fläche (32, 132) versehen ist, welche sich quer zu der Mittelinie (S) erstreckt.

9. Zusatzteilkopplung nach Anspruch 8, **dadurch gekennzeichnet, dass** der Schnittpunkt der ersten geradlinigen Fläche (32, 132) mit der Mittellinie (S) auf der fiktiven Kugel angeordnet ist.

10. Zusatzteilkopplung nach einem der vorhergehenden Ansprüche, **dadurch gekennzeichnet, dass** das Kugelelement (23, 123) auf der Seite, welche von dem Ansatzabschnitt (22) abgewandt ist, mit einer zweiten geradlinigen Fläche (25, 125) versehen ist, welche sich quer zu der Mittellinie (S) erstreckt.

11. Zusatzteilkopplung nach Anspruch 8 und 10, **dadurch gekennzeichnet, dass** die erste geradlinige Fläche (23, 123) zumindest teilweise über der zweiten geradlinigen Fläche (25, 125) angeordnet ist.

12. Zusatzteilkopplung nach einem der vorhergehenden Ansprüche, **dadurch gekennzeichnet, dass** der Arretierungskörper (30) einen integralen Teil des Kugelelements (23) ausbildet.

13. Zusatzteilkopplung zum Anbringen von Zusatzteilen an der Rückseite eines Fahrzeugs, wobei die Zusatzteilkopplung mit einem Ansatzabschnitt (22), dessen Mittellinie (S) im Wesentlichen vertikal verläuft, mit einem Kugelelement (23, 123), welches mit dem Ansatzabschnitt (22) verbunden ist, und mit einem Arretierungskörper (30, 60, 62), welcher mit dem Kugelelement (23, 123) verbunden ist, versehen ist, wobei das Kugelelement (23, 123) eine sphärische Außenfläche aufweist, welche im Wesentlichen auf einer fiktiven Kugel angeordnet ist, deren Mittelpunkt (C) auf der Mittellinie (S) angeordnet ist, und wobei der Arretierungskörper (30, 60, 62) zumindest teilweise außerhalb der fiktiven Kugel angeordnet ist,
**dadurch gekennzeichnet, dass**
das Kugelelement (23, 123) zwei Arretierungskörper (30) aufweist, wobei jeder Arretierungskörper (30) ein einziger Vorsprung (60, 62) von dem Kugelelement (23, 123) ist, welche in einem Abstand von der Mittellinie (S) vorgesehen sind, und dass die einzigen Vorsprünge (60, 62) Eckpunkte aufweisen, die außerhalb der fiktiven Kugel angeordnet sind.

14. Zusatzteilkopplung nach Anspruch 13, **dadurch gekennzeichnet, dass** die Arretierungskörper (30) an den gegenüberliegenden Seiten des Kugelelements für den Ansatzabschnitt vorgesehen sind.

15. Zusatzteilkopplung nach einem der vorhergehenden Ansprüche 13 und 14, **dadurch gekennzeichnet, dass** der Arretierungskörper (30) einen integralen Teil des Kugelelements (23) ausbildet.

16. Zusatzteilkopplung nach einem der vorhergehenden Ansprüche 13 - 15, **dadurch gekennzeichnet, dass** an einem oberen Ende auf der Mittellinie (S) das Kugelelement (23) innerhalb der fiktiven Kugel mit dem Mittelpunkt (C) oder tangential dazu liegt.

## Revendications

1. Accouplement pour accessoire destiné à la fixation d'accessoires à l'arrière d'un véhicule, lequel accouplement pour accessoire est doté d'une partie de collet (22) dont la ligne centrale (S) est sensiblement verticale, d'un élément de boule (23, 123) relié à la partie de collet (22) et d'un corps de blocage (30, 130, 60, 62) relié à l'élément de boule (23, 123), lequel élément de boule (23, 123) présente une surface extérieure sphérique qui se situe sensiblement sur une sphère théorique dont le point central (C) se situe sur la ligne centrale (S), lequel corps de blocage (30, 130) se situe au moins en partie en dehors de la sphère théorique,
**caractérisé en ce que**
le corps de blocage (30, 130, 60, 62) est doté, à une distance de la ligne centrale (S), de points d'angle se situant à l'extérieur de la sphère théorique et **en ce qu'**à une extrémité supérieure sur la ligne centrale (S), le corps de blocage (30, 130) se situe à l'intérieur de la sphère théorique avec le point central (C) ou tangentiellement à celle-ci.

2. Accouplement pour accessoire selon la revendication 1, dans lequel le corps de blocage (30, 130) est disposé sur le côté opposé de l'élément de boule par rapport à la partie de collet.

3. Accouplement pour accessoire selon la revendication 1 ou 2, dans lequel le corps de blocage (30, 130) est oblong.

4. Accouplement pour accessoire selon la revendication 3, dans lequel le corps de blocage (30, 130) s'étend, dans sa direction longitudinale, de manière transversale par rapport à la direction du déplacement du véhicule.

5. Accouplement pour accessoire selon la revendication 3, dans lequel le corps de blocage (30, 130) s'étend, dans sa direction longitudinale, dans la direction du déplacement du véhicule.

6. Accouplement pour accessoire selon l'une quelconque des revendications 3, 4 ou 5, dans lequel le corps de blocage (130) est doté de surfaces latérales mutuellement parallèles (131), parallèles à la ligne centrale (S).

7. Accouplement pour accessoire selon l'une quelconque des revendications précédentes, dans lequel le corps de blocage (30, 130), lorsqu'on le regarde en projection parallèle à la ligne centrale (S), se situe entièrement à l'intérieur de la périphérie extérieure de l'élément de boule (23, 123).

8. Accouplement pour accessoire selon l'une quelconque des revendications précédentes, dans lequel le corps de blocage (30, 130) est doté, sur le côté qui fait face en s'éloignant de l'élément de boule (23, 123), d'une première surface droite (32, 132) qui s'étend de manière transversale par rapport à la ligne centrale (S).

9. Accouplement pour accessoire selon la revendication 8, dans lequel le point d'intersection de la première surface droite (32, 132) avec la ligne centrale (S) se situe sur la sphère théorique.

10. Accouplement pour accessoire selon l'une quelconque des revendications précédentes, dans lequel l'élément de boule (23, 123) est doté, sur le côté qui fait face en s'éloignant de la partie de collet (22), d'une seconde surface droite (25, 125) qui s'étend de manière transversale par rapport à la ligne centrale (S).

11. Accouplement pour accessoire selon les revendications 8 et 10, dans lequel la première surface droite (23, 123) se situe au moins en partie au-dessus de la seconde surface droite (25, 125).

12. Accouplement pour accessoire selon l'une quelconque des revendications précédentes, dans lequel le corps de blocage (30) fait partie intégrante de l'élément de boule (23).

13. Accouplement pour accessoire destiné à la fixation d'accessoires à l'arrière d'un véhicule, lequel accouplement pour accessoire est doté d'une partie de collet (22) dont la ligne centrale (S) est sensiblement verticale, d'un élément de boule (23, 123) relié à la partie de collet (22) et d'un corps de blocage (30, 60, 62) relié à l'élément de boule (23, 123), lequel élément de boule (23, 123) présente une surface extérieure sphérique qui se situe sensiblement sur une sphère théorique dont le point central (C) se situe sur la ligne centrale (S), lequel corps de blocage (30, 60, 62) se situe au moins en partie en dehors de la sphère théorique,
**caractérisé en ce que**
l'élément de boule (23, 123) comprend deux corps de blocage (30), où chaque corps de blocage (30) est une saillie singulière (60, 62) à partir de l'élément de boule (23, 123), qui sont situés à une distance de la ligne centrale (S) et **en ce que** les saillies singulières (60, 62) comprennent des points d'angle qui sont situés en dehors de la sphère théorique.

14. Accouplement pour accessoire selon la revendication 13, dans lequel les corps de blocage (30) sont disposés sur le côté opposé de l'élément de boule par rapport à la partie de collet.

15. Accouplement pour accessoire selon l'une quelconque des revendications 13 et 14, dans lequel le corps de blocage (30) forme une partie intégrante de l'élément de boule (23).

16. Accouplement pour accessoire selon l'une quelconque des revendications 13-15, dans lequel, à une extrémité supérieure sur la ligne centrale (S), l'élément de boule (23) se situe à l'intérieur de la sphère théorique avec le point central (C) ou tangentiellement à celle-ci.
